# EUROPEAN PATENT SPECIFICATION

(11) **EP 3 938 215 B1**
(45) Date of publication and mention of the grant of the patent: **05.08.2026**
(21) Application number: 20713114.5
(22) Date of filing: 09.03.2020
(51) Int. Cl.: B41M 5/28, B41M 7/00, B41M 3/16, B41M 7/02

(54) **METHOD FOR PRODUCING PRINTED PRODUCT, APPARATUS FOR PRODUCING PRINTED PRODUCT, AND SET FOR PRINTING**
VERFAHREN ZUR HERSTELLUNG EINES GEDRUCKTEN RODUKTS, VORRICHTUNG ZUR HERSTELLUNG EINES GEDRUCKTEN PRODUKTS UND DRUCKSATZ
PROCÉDÉ DE PRODUCTION DE PRODUIT IMPRIMÉ, APPAREIL DE PRODUCTION DE PRODUIT IMPRIMÉ, ET ENSEMBLE D'IMPRESSION

(30) Priority: 12.03.2019 JP 2019044418; 23.12.2019 JP 2019231712
(43) Date of publication of application: 19.01.2022
(73) Proprietor: Ricoh Company, Ltd., Tokyo 143-8555 (JP)
(72) Inventor: FUJIWARA, Yukio, Tokyo 143-8555 (JP); USUI, Yuuma, Tokyo 143-8555 (JP)
(74) Representative: Marks & Clerk LLP
(86) International application number: PCT/JP2020/010016
(87) International publication number: WO 2020/184514

(56) References cited:
- EP-A1- 2 423 285
- WO-A1-2018/015357
- JP-A- H09 109 303

## Description

### [Technical Field]

The present invention relates to a method for producing a printed product, an apparatus for producing a printed product, and a set for printing.

### [Background Art]

Floors, inner walls, and ceilings of buildings include materials such as flooring materials and wallpaper in which a desired image is printed and to which designability is given through embossing. An attempt to improve durability has been made by coating a flooring material or wall paper with an ultraviolet ray (UV) curable material or by coating it with an electron beam curable material.

In recent years, such an attempt that a desired image is printed through an inkjet method and the image is applied to a flooring material or wallpaper has been made. For example, proposed is a method for producing a foamed wallpaper, where the foamed wallpaper includes a foamed layer, an image forming layer, and a surface protection layer, the foamed layer includes a thermoplastic resin and a foaming agent, and the image forming layer and the surface protection layer are crosslinked or cured by irradiation of electron beams (see, for example, Patent Literature 1). A method for producing a printed product by forming a foamable layer, applying a decorative layer and applying thermal treatment is disclosed in Patent Literature 2. Patent Literature 3 discloses a curable composition comprising a polymerizable compound and a heat expanding compound.

### [Citation List]

### [Patent Literature]

[PTL 1] Japanese Patent No. 5195999
[PTL 2] WO 2018/015357 A1
[PTL 3] EP 2 423 285 A1

### [Summary of Invention]

### [Technical Problem]

An object of the present invention is to provide a method for producing a printed product, where the method can achieve a printed product having the designability obtained by excellent concave and convex shapes and the image quality, and the method can achieve a printed product that can maintain the designability obtained by excellent concave and convex shapes and the image quality for a long period of time.

### [Solution to Problem]

The invention is set out in the appended claims. According to one aspect of the present invention, a method for producing a printed product includes: applying a curable composition including a volume expansion agent and a polymerizable monomer, to form a volume expansion layer; applying a volume-expansion-inhibiting-liquid to a portion other than a portion of the volume expansion layer to be volume-expanded; applying a colorant composition including a colorant, to form a colorant layer; and applying heat or active energy rays to the volume expansion layer and the colorant layer, wherein the volume-expansion-inhibiting-liquid comprises a multifunctional polymerizable monomer.

### [Advantageous Effects of Invention]

According to the present invention, it is possible to provide a method for producing a printed product, where the method can achieve a printed product having the designability obtained by excellent concave and convex shapes and the image quality, and the method can achieve a printed product that can maintain the designability obtained by excellent concave and convex shapes and the image quality for a long period of time.

### [Brief Description of Drawings]

[FIG. 1]

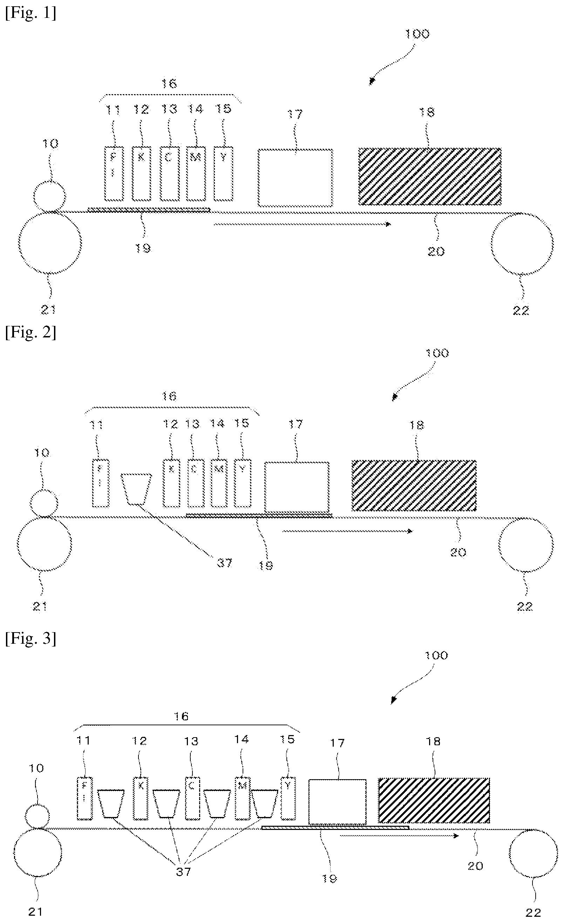

   FIG. 1 is a schematic diagram illustrating one example of an apparatus of the present invention for producing a printed product used in a method of the present invention for producing a printed product in Example 1.
[FIG. 2]
   FIG. 2 is a schematic diagram illustrating one example of an apparatus of the present invention for producing a printed product used in a method of the present invention for producing a printed product in Example 3.
[FIG. 3]
   FIG. 3 is a schematic diagram illustrating one example of an apparatus of the present invention for producing a printed product used in a method of the present invention for producing a printed product in Example 4.
[FIG. 4]

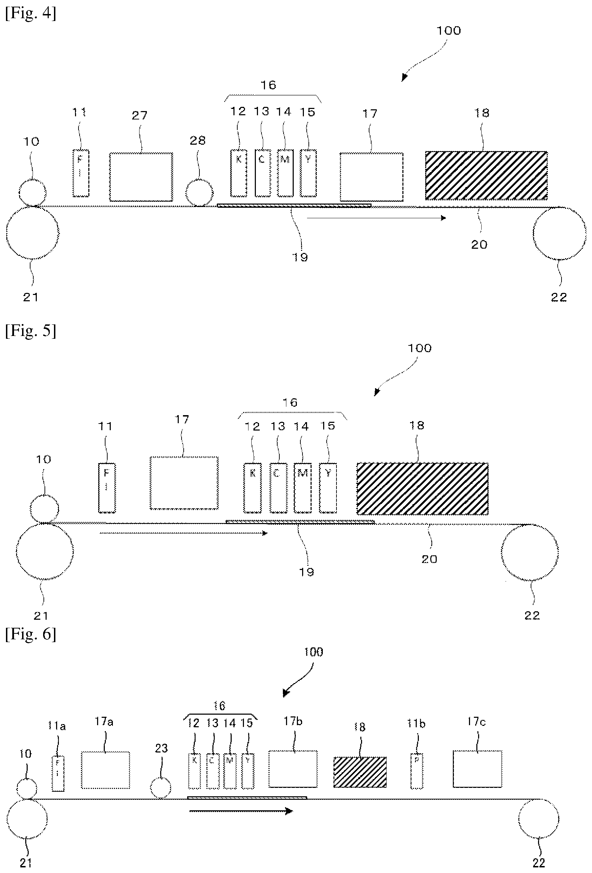

   FIG. 4 is a schematic diagram illustrating one example of an apparatus of the present invention for producing a printed product used in a method of the present invention for producing a printed product in Example 5.
[FIG. 5]
   FIG. 5 is a schematic diagram illustrating one example of an apparatus for producing a printed product used in a method for producing a printed product in Example 6.
[FIG. 6]
   FIG. 6 is a schematic diagram illustrating one example of an apparatus for producing a printed product used in a method for producing a printed product in Example 9.

### [Description of Embodiments]

### (Method for producing printed product and apparatus for producing printed product)

A method of the present invention for producing a printed product includes: a volume expansion layer forming step of applying a curable composition including a volume expansion agent and a polymerizable monomer, to form a volume expansion layer; a volume-expansion-inhibiting-liquid applying step of applying a volume-expansion-inhibiting-liquid to a portion other than a portion of the volume expansion layer to be volume-expanded, wherein the volume-expansion-inhibiting-liquid comprises a multifunctional polymerizable monomer;
a colorant layer forming step of applying a colorant composition including a colorant, to form a colorant layer; and an energy applying step of applying heat or active energy rays to the volume expansion layer and the colorant layer, preferably includes a volume expansion step, and further includes other steps if necessary.

An apparatus of the present invention for producing a printed product includes: a volume expansion layer forming unit comprising the abovementioned curable composition configured to apply the curable composition, to form a volume expansion layer; a volume-expansion-inhibiting-liquid applying unit comprising the above-mentioned volume-expansion-inhibiting-liquid and configured to apply the volume-expansion-inhibiting-liquid to a portion other than a portion of the volume expansion layer to be volume-expanded; a colorant layer forming unit configured to apply the above-mentioned colorant composition and configured to apply the colorant composition, to form a colorant layer; and an energy applying unit configured to apply heat or active energy rays to the volume expansion layer and the colorant layer, preferably includes a volume expansion unit, and further includes other units if necessary.

The method of the present invention for producing a printed product can be suitably performed by the apparatus of the present invention for producing a printed product, the volume expansion layer forming step can be performed by the volume expansion layer forming unit, the colorant layer forming step can be performed by the colorant layer forming unit, the energy applying step can be performed by the energy applying unit, the volume expansion step can be performed by the volume expansion unit, the volume-expansion-inhibiting-liquid applying step can be performed by the volume-expansion-inhibiting-liquid applying unit, and the other steps can be performed by the other units.

The conventional techniques have the following problems. Specifically, designability, which is given by protecting a printed product through the surface coating or by allowing a pyrolytic foaming agent to foam, is insufficient in durability of the designability obtained by concave and convex shapes and the image quality. Furthermore, a thin volume expansion layer cannot form the volume expansion layer having differences between concave portions and convex portions, and cannot give designability obtained by excellent concave and convex shapes.

Therefore, the method of the present invention includes: a volume expansion layer forming step of applying a curable composition including a volume expansion agent and a polymerizable monomer, to form a volume expansion layer; a volume-expansion-inhibiting-liquid applying step; a colorant layer forming step of applying a colorant composition including a colorant, to form a colorant layer; and an energy applying step of applying heat or active energy rays to the volume expansion layer and the colorant layer, and preferably includes a volume expansion step. As a result, an appropriate three-dimensional cross-linked structure can be formed and thus consistency of the volume expansion layer and excellent volume expansibility can be achieved, which makes it possible to achieve both the designability obtained by excellent concave and convex shapes and the image quality for a long period of time.

In the volume-expansion-inhibiting-liquid, a multifunctional polymerizable monomer is used. The multifunctional polymerizable monomer is three-dimensionally crosslinked by application of heat or active energy rays. Therefore, on/off of the volume expansion can be controlled by applying a multifunctional polymerizable monomer in a portion other than a portion of the volume expansion layer to be volume-expanded, and then applying heat or active energy rays thereto. As a result, it is possible to give the designability obtained by excellent concave and convex shapes to a printed product.

### <Volume expansion layer forming step and volume expansion layer forming unit>

The volume expansion layer forming step is a step of applying a curable composition including a volume expansion agent and a polymerizable monomer, to form a volume expansion layer, and is performed by the volume expansion layer forming unit.

The curable composition including the volume expansion agent and the polymerizable monomer is preferably applied to a base material.

### <<Base material>>

The base material is not particularly limited and may be appropriately selected depending on the intended purpose. Examples thereof include plastic films, synthetic paper formed of synthetic fibers, sheets such as non-woven fabrics, and materials for building. Among them, base materials having durability are preferable, materials for building are more preferable.

The base material is not particularly limited and may be appropriately selected depending on the intended purpose. Examples thereof include paper such as natural paper or synthetic paper, plastic films, non-woven fabrics, cloths, wooden materials, and metallic thin films.

Examples of the plastic film include: polyester films; polypropylene films; polyethylene films; films of plastics (e.g., nylon, vinylon, and acryl); and those obtained by pasting the films.

The plastic film is not particularly limited and may be appropriately selected depending on the intended purpose. Preferably, the plastic film is uniaxially or biaxially stretched in terms of strength.

The non-woven fabric is not particularly limited and may be appropriately selected depending on the intended purpose. Examples thereof include products formed by spraying polyethylene fibers in the form of a sheet and then subjecting the resultant to thermocompression bonding so as to have a sheet shape.

Examples of the material for building include: thermosetting resins; fiberboards; particle boards; and products obtained by providing a dressing board such as a thermosetting resin, olefin, polyester, or PVC on the surface of the material described above, which are used in, for example, flooring materials, wallpaper, interior materials, wall panel materials, baseboard materials, ceiling materials, and pillars.

A method for applying the curable composition on the base material is not particularly limited and may be appropriately selected depending on the intended purpose. Examples thereof include: coating methods such as the knife coating method, the nozzle coating method, the die coating method, the lip coating method, the comma coating method, the gravure coating method, the rotary screen coating method, the reverse roll coating method, the roll coating method, the spin coating method, the kneader coating method, the bar coating method, the blade coating method, the cast method, the dip method, and the curtain coating method; and inkjet methods.

An average thickness of the volume expansion layer is not particularly limited and may be appropriately selected depending on the intended purpose. The average thickness thereof is preferably 25 micrometers or more, more preferably 100 micrometers or more, still more preferably 250 micrometers or more, particularly preferably 300 micrometers or more but 500 micrometers or less.

Note that, the average thickness of the volume expansion layer represents an average thickness of the volume expansion layer before volume expansion by a volume expansion agent.

When the average thickness of the volume expansion layer is 100 micrometers or more, the volume expansion layer having differences between concave portions and convex portions can be formed to thereby give the designability obtained by excellent concave and convex shapes. An average thickness of the volume expansion layer after the volume is expanded is not particularly limited and may be appropriately selected depending on the intended purpose. The average thickness thereof is preferably 100 micrometers or more, more preferably 310 micrometers or more, still more preferably 400 micrometers or more, particularly preferably 400 micrometers or more but 2,000 micrometers or less. When the average thickness after the volume is expanded is 100 micrometers or more, the volume expansion layer having differences between the concave portions and the convex portions created by the volume-expansion-inhibiting-liquid can be formed to thereby give the designability obtained by excellent concave and convex shapes.

### <<Curable composition>>

The curable composition includes a volume expansion agent and a polymerizable monomer, preferably includes a polymerization initiator if necessary, and further includes other components if necessary. Examples of the curable composition include thermosetting compositions and active-energy-ray-curable compositions. In terms of durability of the designability obtained by the concave and convex shapes, an active-energy-ray-curable composition is more suitable.

### -Volume expansion agent-

As the volume expansion agent, a thermally expandable microcapsule or a pyrolytic volume expansion agent is used. Among them, a thermally expandable microcapsule is preferable because it has a high volume expansion ratio and can form uniform and small closed cells. Note that, the volume expansion agent may be referred to as a foaming agent.

The thermally expandable microcapsule is a particle having a core-shell structure in which the volume expansion agent is covered with the thermoplastic resin. The thermoplastic resin that is the outer shell starts to be softened through heating, and vapor pressure of the volume expansion compound encapsulated is increased to reach enough pressure to deform the particle. As a result, the thermoplastic resin that is the outer shell is stretched and expanded. Examples of the volume expansion compound include aliphatic hydrocarbons having a low boiling point.

The thermally expandable microcapsule may be a commercially available product. Examples of the commercially available product include ADVANCELL EM series (available from SEKISUI CHEMICAL CO., LTD.), Expancel DU, WU, MB, SL, and FG series (available from AkzoNovel) (in Japan, they are sold by Japan Fillite Co., Ltd.), Matsumoto Microsphere F and FN series (available from Matsumoto Yushi-Seiyaku Co., Ltd.), and KUREHA Microsphere H750, H850, and H1100 series (available from KUREHA CORPORATION). These may be used alone or in combination.

Examples of the pyrolytic volume expansion agent include organic volume expansion agents and inorganic volume expansion agents.

Examples of the organic volume expansion agent include azodicarbonamide (ADCA), azobisisobutyronitrile (AIBN), p,p'-oxybisbenzenesulfonylhydrazide (OBSH), and dinitrosopentamethylenetetramine (DPT). These may be used alone or in combination.

Examples of the inorganic volume expansion agent include hydrogencarbonates such as sodium hydrogencarbonate, carbonates, and combinations of a hydrogencarbonate and an organic acid salt.

A content of the volume expansion agent is not particularly limited and may be appropriately selected depending on the intended purpose. The content thereof is preferably 1% by mass or more but 20% by mass or less, more preferably 5% by mass or more but 15% by mass or less relative to the total content of the curable composition.

### <<Polymerizable monomer>>

Examples of the polymerizable monomer include monofunctional monomers and multifunctional monomers.

### -Monofunctional monomer-

The monofunctional monomer includes a vinyl group, an acryloyl group, or a methacryloyl group in a molecule structure thereof.

Examples of the monofunctional monomer include γ-butyrolactone (meth)acrylate, isobornyl (meth)acrylate, formalized trimethylolpropane mono(meth)acrylate, trimethylolpropane (meth)acrylic acid benzoate, (meth)acryloylmorpholine, 2-hydroxypropyl (meth)acrylamide, N-vinylcaprolactam, N-vinylpyrrolidone, N-vinylformamide, cyclohexanedimethanol monovinyl ether, hydroxyethyl vinyl ether, diethylene glycol monovinyl ether , dicyclopentadiene vinyl ether, tricyclodecane vinyl ether, benzyl vinyl ether, ethyloxetane methyl vinyl ether, hydroxybutyl vinyl ether, ethyl vinyl ether, ethoxy (4) nonylphenol (meth)acrylate, benzil (meth)acrylate, and caprolactone (meth)acrylate. These may be used alone or in combination.

Among them, isobornyl (meth)acrylate is preferable in terms of a high grass transition temperature (Tg) and a good consistency.

A content of the monofunctional monomer is preferably 80% by mass or more but 99.5% by mass or less, more preferably 90% by mass or more but 95% by mass or less relative to the total content of the curable composition.

### -Multifunctional monomer-

The multifunctional monomer is a compound including two or more vinyl groups, acryloyl groups, or methacryloyl groups in a molecule structure thereof.

Examples of the multifunctional monomer include ethylene glycol di(meth)acrylate, hydroxy pivalic acid neopentyl glycol di(meth)acrylate, polytetramethylene glycol di(meth)acrylate, diethylene glycol di(meth)acrylate, triethylene glycol di(meth)acrylate, tetraethylene glycol di(meth)acrylate, polyethylene glycol dimethacrylate [CH₂=CH-CO-(OC₂H₄)n-OCOCH=CH₂ (n is nearly equal to 9), CH₂=CH-CO-(OC₂H₄)n-OCOCH=CH₂ (n is nearly equal to 14), CH₂=CH-CO-(OC₂H₄)n-OCOCH=CH₂ (n is nearly equal to 23)], dipropylene glycol di(meth)acrylate, tripropylene glycol di(meth)acrylate, polypropylene glycol dimethacrylate [CH₂=C(CH₃)-CO-(OC₃H₆)ₙ-OCOC(CH₃)=CH₂ (n is nearly equal to 7)], 1,3-butanediol di(meth)acrylate, 1,4-butanediol di(meth)acrylate, 1,6-hexanediol di(meth)acrylate, 1,9-nonanediol di(meth)acrylate, neopentyl glycol di(meth)acrylate, tricyclodecanedimethanol di(meth)acrylate, propylene oxide-modified bisphenol A di(meth)acrylate, polyethylene glycol di(meth)acrylate, dipentaerythritol hexa(meth)acrylate, propylene oxide-modified tetramethylolmethane tetra(meth)acrylate, dipentaerythritol hydroxypenta (meth)acrylate, caprolactone-modified dipentaerythritol hydroxypenta (meth)acrylate, ditrimethylolpropane tetra(meth)acrylate, pentaerythritol tetra(meth)acrylate, trimethylolpropane tri(meth)acrylate, ethylene oxide-modified trimethylolpropane tri(meth)acrylate, propylene oxide-modified trimethylolpropane tri(meth)acrylate, caprolactone-modified trimethylolpropane tri(meth)acrylate, pentaerythritol tri(meth)acrylate, tris(2-hydroxyethyl)isocyanurate tri(meth)acrylate, ethoxylated neopentyl glycol di(meth)acrylate, propylene oxide-modified neopentyl glycol di(meth)acrylate, propylene oxide-modified glyceryl tri(meth)acrylate, polyester di(meth)acrylate, polyester tri(meth)acrylate, polyester tetra(meth)acrylate, polyester penta(meth)acrylate, polyester poly(meth)acrylate, polyurethane di(meth)acrylate, polyurethane tri(meth)acrylate, polyurethane tetra(meth)acrylate, polyurethane penta(meth)acrylate, polyurethane poly(meth)acrylate, triethylene glycol divinyl ether, cyclohexanedimethanol divinyl ether, diethylene glycol divinyl ether, triethylene glycol divinyl ether, and ethoxylated (4) bisphenol di(meth)acrylate. These may be used alone or in combination.

The [molecular weight/number of functional groups] of the multifunctional monomer is preferably 250 or more because both the volume expansibility and the consistency can be achieved.

A content of the multifunctional monomer in the curable composition is 10% by mass or less, preferably 1% by mass or less relative to the total content of the polymerizable monomer. The content of the multifunctional monomer is preferably 0.1% by mass or more, more preferably 0.5% by mass or more relative to the total content of the polymerizable monomer. The content of the multifunctional monomer satisfying 10% by mass or less relative to the total content of the polymerizable monomer is advantageous because the both designability (volume expansibility) and the consistency can be achieved.

### -Polymerization initiator-

Examples of the polymerization initiator include thermal polymerization initiators and photopolymerization initiators. Among them, a photopolymerization initiator is more preferable in terms of durability of the designability obtained by concave and convex shapes and the image quality.

The photopolymerization initiator produces active species such as a radical or a cation upon application of energy of an active energy ray and initiates polymerization of a polymerizable monomer. As the polymerization initiator, it is suitable to use a known radical polymerization initiator, cation polymerization initiator, base producing agent, or a combination thereof. Among them, a radical polymerization initiator is preferable.

A content of the polymerization initiator is preferably 1% by mass or more but 20% by mass or less, more preferably 5% by mass or more 15% by mass or less relative to the total content of the curable composition in order to achieve a sufficient curing speed.

Specific examples of the radical polymerization initiators include, but are not limited to, aromatic ketones, acylphosphine oxide compounds, aromatic onium chlorides, organic peroxides, thio compounds (for example, thioxanthone compounds and thiophenyl group containing compounds), hexaaryl biimidazole compounds, ketoxime ester compounds, borate compounds, azinium compounds, metallocene compounds, active ester compounds, compounds having a carbon halogen bond(s), and alkyl amine compounds.

In addition, a polymerization accelerator (sensitizer) is optionally used together with the polymerization initiator.

The polymerization accelerator is not particularly limited and may be appropriately selected depending on the intended purpose. Examples thereof include amine compounds such as trimethylamine, methyl dimethanol amine, triethanol amine, p-diethylamino acetophenone, p-dimethyl amino ethylbenzoate, p-dimethyl amino benzoate-2-ethylhexyl, N,N-dimthyl benzylamine and 4,4'-bis(diethylamino)benzophenone.

The content of the polymerization accelerator is not particularly limited and may be determined depending on the identity (type) of the polymerization initiator and the content thereof.

### -Other components-

The other components are not particularly limited and may be appropriately selected depending on the intended purpose. Examples thereof include fillers, volume expansion accelerators, dispersants, colorants, organic solvents, anti-blocking agents, thickeners, preservatives, stabilizers, deodorants, fluorescent agents, and ultraviolet screening agents.

### --Filler--

Examples of the filler include aluminum hydroxide, magnesium hydroxide, barium hydroxide, calcium carbonate, magnesium carbonate, calcium sulfate, barium sulfate, ferrous hydroxide, basic zinc carbonate, basic lead carbonate, silica sand, clay, talc, silica, titanium dioxide, and magnesium silicate. These may be used alone or in combination. Among them, calcium carbonate, magnesium carbonate, aluminum hydroxide, and magnesium hydroxide are preferable.

### --Volume expansion accelerator--

The volume expansion accelerator is not particularly limited and may be appropriately selected depending on the intended purpose. Examples thereof include zinc naphthenate, zinc acetate, zinc propionate, zinc 2-ethylpentanoate, zinc 2-ethyl-4-methylpentanoate, zinc 2-methylhexanoate, zinc 2-ethylhexanoate, zinc isooctylate, zinc n-octylate, zinc neodecanoate, zinc isodecanoate, zinc n-decanoate, zinc laurate, zinc myristate, zinc palmitate, zinc stearate, zinc isostearate, zinc 12-hydroxystearate, zinc behenate, zinc oleate, zinc linoleate, zinc linolenate, zinc ricinoleate, zinc benzoate, zinc o-toluate, zinc m-toluate, zinc p-toluate, zinc p-t-butylbenzoate, zinc salicylate, zinc phthalate, zinc salts of monoalkyl (C4 to C18) phthalate esters, zinc dehydroacetate, zinc dibutyldithiocarbamate, zinc aminocrotonate, zinc salts of 2-mercaptobenzothiazole, zinc pyrithione, and zinc complexes of urea or diphenylurea. These may be used alone or in combination.

### --Thickener--

Examples of the thickener include polycyanoacrylate, polylactic acid, polyglycolic acid, polycaprolactone, polyalkyl acrylate ester, and polyalkyl methacrylate ester.

### --Preservative--

Examples of the preservative include conventionally used products that do not initiate polymerization of a monomer, such as potassium sorbate, sodium benzoate, sorbic acid, and chlorocresol.

### --Stabilizer--

The stabilizer inhibits polymerization of the monomer during the storage. Examples thereof include anionic stabilizers and free radical stabilizers. Examples of the anionic stabilizer include metaphosphoric acid, maleic acid, maleic anhydride, alkyl sulphonic acid, phosphorus pentaoxide, iron(III) chloride, antimony oxide, 2,4,6-trinitrophenol, thiol, alkylsulfonyl, alkylsulfone, alkyl sulfoxide, alkyl sulphite, sultone, sulfur dioxide, and sulfur trioxide.

Examples of the free radical stabilizer include hydroquinone, catechol, and derivatives thereof.

### <Preparation of curable composition>

The curable composition used in the present invention can be prepared by using the components described above. The preparation devices and conditions are not particularly limited.

### <Colorant layer forming step and colorant layer forming unit>

The colorant layer forming step is a step of applying a colorant composition including a colorant, to form a colorant layer, and is performed by the colorant layer forming unit.

### <<Colorant composition>>

The colorant composition includes a colorant. In terms of durability of the designability obtained by concave and convex shapes and the image quality, the colorant composition preferably includes a polymerizable compound and a polymerization initiator, and further includes other components if necessary.

### -Colorant-

As the colorant, various pigments and dyes may be used that impart black, white, magenta, cyan, yellow, green, orange, and gloss colors such as gold and silver, depending on the intended purpose of the colorant composition and requisite properties thereof.

A content of the colorant is not particularly limited, and may be appropriately determined considering, for example, a desired color density and dispersibility of the colorant in the composition. The content thereof is preferably 0.1% by mass or more but 20% by mass or less, more preferably 1% by mass or more but 10% by mass or less relative to the total content of the colorant composition.

The pigment can be either inorganic or organic. These pigments can be used alone or in combination.

Specific examples of the inorganic pigments include, but are not limited to, carbon blacks (C.I. Pigment Black 7) such as furnace black, lamp black, acetylene black, and channel black, iron oxides, and titanium oxides.

Specific examples of the organic pigments include, but are not limited to, azo pigments such as insoluble azo pigments, condensed azo pigments, azo lakes, and chelate azo pigments, polycyclic pigments such as phthalocyanine pigments, perylene pigments, perinone pigments, anthraquinone pigments, quinacridone pigments, dioxazine pigments, thioindigo pigments, isoindolinone pigments, and quinofuranone pigments, dye chelates (e.g., basic dye chelates, acid dye chelates), dye lakes (e.g., basic dye lakes, acid dye lakes), nitro pigments, nitroso pigments, aniline black, and daylight fluorescent pigments.

In addition, a dispersant is optionally added to enhance the dispersibility of the pigment.

The dispersant has no particular limit and can be, for example, polymer dispersants conventionally used to prepare pigment dispersion (material). Examples of the dyes include, but are not limited to, acidic dyes, direct dyes, reactive dyes, and basic dyes. These may be used alone or in combination.

### -Polymerizable compound-

As the polymerizable compound, the same as the polymerizable monomer of the curable composition in the aforementioned volume expansion layer can be used.

### -Polymerization Initiator-

As the polymerization initiator, the same as the polymerization initiator of the curable composition in the aforementioned volume expansion layer can be used.

### <Other components>

The other components are not particularly limited and may be appropriately selected depending on the intended purpose. Examples thereof include organic solvents, surfactants, polymerization inhibitors, leveling agents, defoaming agents, fluorescent brighteners, permeation enhancing agents, wetting agents (humectants), fixing agents, viscosity stabilizers, fungicides, preservatives, antioxidants, ultraviolet absorbents, chelate agents, pH adjusters, (regulators), and thickeners.

### -Organic solvent-

The colorant composition used in the present invention optionally contains an organic solvent although it is preferable to spare it. The composition free of an organic solvent, in particular volatile organic compound (VOC), is preferable because it enhances safety at where the composition is handled and makes it possible to prevent pollution of the environment. Incidentally, the organic solvent represents a conventional non-reactive organic solvent, for example, ether, ketone, xylene, ethyl acetate, cyclohexanone, and toluene, which is clearly distinguished from reactive monomers. Furthermore, "free of" an organic solvent means that no organic solvent is substantially contained. The content thereof is preferably less than 0.1 percent by mass.

### <Preparation of colorant composition>

The colorant composition used in the present invention can be prepared by using the components described above. The preparation devices and conditions are not particularly limited. For example, the composition can be prepared by subjecting a pigment as the colorant, a dispersant, etc., to a dispersion treatment using a dispersing machine such as a ball mill, a kitty mill, a disk mill, a pin mill, and a DYNO-MILL to prepare a pigment liquid dispersion, and further mixing the pigment liquid dispersion with a polymerizable compound, a polymerization initiator, a polymerization inhibitor, and a surfactant.

### <Viscosity>

The viscosity of the colorant composition used in the present invention has no particular limit because it can be adjusted depending on the purpose and application devices. For example, if an ejecting device that ejects the composition from nozzles is employed, the viscosity thereof is preferably in the range of 3 mPa · s or more but 40 mPa · s or less, more preferably 5 mPa · s or more but 15 mPa · s or less, and particularly preferably 6 mPa · s or more but 12 mPa · s or less in the temperature range of 20 degrees C to 65 degrees C, preferably at 25 degrees C. In addition, it is particularly preferable to satisfy this viscosity range by the composition free of the organic solvent described above. Incidentally, the viscosity can be measured by a cone plate rotary viscometer (VISCOMETER TVE-22L, manufactured by TOKI SANGYO CO.,LTD.) using a cone rotor (1°34' x R24) at a number of rotation of 50 rpm with a setting of the temperature of hemathermal circulating water in the range of 20 degrees C to 65 degrees C. VISCOMATE VM-150III can be used for the temperature adjustment of the circulating water.

A method for applying the aforementioned colorant composition on the volume expansion layer is not particularly limited and may be appropriately selected depending on the intended purpose. However, an inkjet method is preferable because it has productivity and is flexibly adaptable to various items in small lot production. In the inkjet method, as a method for driving a discharging head, for example, an on-demand head that utilizes a piezoelectric element actuator using, for example, PZT, a thermal energy driving scheme, an electrostatic actuator, or the like may be used, or a continuous-jetting, charge-control head may also be used.

### <Volume-expansion-inhibiting-liquid applying step and volume-expansion-inhibiting-liquid applying unit>

The volume-expansion-inhibiting-liquid applying step is a step of applying a volume-expansion-inhibiting-liquid to a portion other than a portion of the volume expansion layer to be volume-expanded, and is performed by the volume-expansion-inhibiting-liquid applying unit.

In the volume-expansion-inhibiting-liquid, a multifunctional polymerizable monomer is used.

As the multifunctional polymerizable monomer, the same as the multifunctional monomer in the curable composition of the aforementioned volume expansion layer can be used. For example, 1,6-hexanediol di(meth)acrylate, 1,3-butylene glycol diacrylate, 1,4-butanediol diacrylate, diethylene glycol diacrylate, neopentyl glycol diacrylate, and dipropylene glycol diacrylate can be used. In addition, mixtures of different multifunctional monomers, mixtures of a multifunctional monomer and a monofunctional monomer, mixtures of an oligomer including a multifunctional group and a monofunctional monomer, and mixtures of a monofunctional monomer, a multifunctional monomer, and an oligomer including a multifunctional group can also be used.

When the volume-expansion-inhibiting-liquid is the multifunctional polymerizable monomer, the multifunctional polymerizable monomer is three-dimensionally crosslinked by application of heat or active energy rays. Therefore, when the multifunctional polymerizable monomer is applied to any portion of the volume expansion layer and heat or active energy rays is applied thereto, on/off of the volume expansion can be controlled to thereby give the designability obtained by excellent concave and convex shapes to a printed product, which is advantageous.

A method for applying the volume-expansion-inhibiting-liquid is not particularly limited and may be appropriately selected depending on the intended purpose. However, the inkjet method is preferable because it is flexibly adaptable to various patterns of volume expansion (patterns of volume expansion inhibition).

In the inkjet method, as a method for driving a discharging head, for example, an on-demand head that utilizes a piezoelectric element actuator using, for example, PZT, a thermal energy driving scheme, an electrostatic actuator, or the like may be used, or a continuous-jetting, charge-control head may be used.

A content of the volume-expansion-inhibiting-liquid applied is not particularly limited and may be appropriately selected depending on the intended purpose. The content thereof is preferably from 0.01 pL/*µ*m² through 2.25 pL/*µ*m² relative to the surface area of the volume expansion layer.

The curable composition including the volume expansion agent and the polymerizable monomer can be coated using a conventional coating unit such as a roller, a curtain coater, or a die coater depending on the intended viscosity and film thickness.

The colorant composition including the colorant and the volume-expansion-inhibiting-liquid can be applied through the inkjet method. Examples of the combinations of the method for coating each composition include those presented in FIG. 1 to FIG. 6. Note that, when an aqueous colorant composition is coated, the subsequent irradiation of active energy rays may be omitted. Specifically, there are the following combinations:
(A) a method where a curable composition is coated using a roller, a volume-expansion-inhibiting-liquid and a colorant composition are applied through the inkjet (IJ) method, and active energy rays are emitted, followed by heating; (B) a method where a curable composition is coated using a roller, a volume-expansion-inhibiting-liquid is applied through the inkjet (IJ) method, a colorant composition is applied through the inkjet (IJ) method after irradiation of active energy rays, and the resultant is heated after irradiation of active energy rays; and (C) a method where a curable composition is coated using a roller, a volume-expansion-inhibiting-liquid is applied through the inkjet (IJ) method, an intermediate layer-coating liquid is coated using a roller after irradiation of active energy rays, and a colorant composition is applied through the inkjet (IJ) method, followed by irradiation of active energy rays. Furthermore, the aforementioned combinations include a combination where the colorant is applied using a dispenser, the curable composition is applied using a dispenser, and the volume-expansion-inhibiting-liquid is applied through the inkjet (IJ) method.

### <Energy applying step and energy applying unit>

The energy applying step is a step of applying heat or active energy rays to the volume expansion layer and the colorant layer, and is performed by the energy applying unit.

In the case where the energy is heat energy, the heat energy is applied to the volume expansion layer to thereby cure the volume expansion layer and cause expansion. In addition, portions of the volume expansion layer to which the volume-expansion-inhibiting-liquid is applied are also three-dimensionally crosslinked. In addition, when the colorant layer includes the polymerizable compound, the colorant layer is cured by application of heat energy. When the colorant layer includes no polymerizable compound, the colorant layer is dried by application of heat energy.

The application of heat energy is not particularly limited and may be appropriately selected depending on the intended purpose. For example, an infrared heater, a warm air heater, and a heating roller are used. A temperature of the heating is not particularly limited and may be appropriately selected depending on the intended purpose so long as the volume expansion layer and the colorant layer can be thermally cured and the temperature of the heating is equal to or higher than the thermal decomposition temperature of the volume expansion agent. The temperature of the heating is preferably 100 degrees C or more but 200 degrees C or less.

When the energy is active energy rays, the volume expansion layer is cured by irradiating the volume expansion layer with active energy rays. When the colorant layer includes the polymerizable compound, the colorant layer is cured by irradiation of active energy rays. When the colorant layer includes no polymerizable compound, the colorant layer is not changed by irradiation of active energy rays. When the energy is active energy rays, it is preferable that the volume expansion step of heating the volume expansion layer to thereby expand the volume expansion layer be further included.

### <Active energy rays>

Active energy rays are not particularly limited, so long as they are able to give necessary energy for allowing polymerization reaction of polymerizable components in the composition to proceed. Examples of the active energy rays include electron beams, *α*-rays, *β*-rays, *γ*-rays, and X-rays, in addition to ultraviolet rays. When a light source having a particularly high energy is used, polymerization reaction can be allowed to proceed without a polymerization initiator. In addition, in the case of irradiation with ultraviolet ray, mercury-free is preferred in terms of protection of environment. Therefore, replacement with GaN-based semiconductor ultraviolet light-emitting devices is preferred from industrial and environmental point of view. Furthermore, ultraviolet light-emitting diode (UV-LED) and ultraviolet laser diode (UV-LD) are preferable as an ultraviolet light source. Small sizes, long time working life, high efficiency, and high cost performance make such irradiation sources desirable.

Curing conditions are not particularly limited and may be appropriately selected depending on the intended purpose. In the case of ultraviolet rays, it is preferable to use an irradiator that enables irradiation at intensity of 6 W/cm or more at an irradiation distance of 2 mm.

In the case of electron beams, preferable is such an accelerating voltage that reaches a dose of 15 kGy or more at a portion to be cured that is the furthest from an electron beam irradiator.

### <Volume expansion step and volume expansion unit>

The volume expansion step is a step of heating the volume expansion layer to thereby expand the volume expansion layer, and is performed by the volume expansion unit.

The volume expansion unit is not particularly limited and may be appropriately selected depending on the intended purpose so long as it is a unit configured to expand the volume expansion agent of the volume expansion layer through heating. For example, an infrared heater, a warm air heater, and a heating roller are used.

A temperature of the heating is not particularly limited and may be appropriately selected depending on the intended purpose so long as the temperature of the heating is equal to or higher than the thermal decomposition temperature of the volume expansion agent. The temperature of the heating is preferably 100 degrees C or more but 200 degrees C or less.

### <Other steps and other units>

The other steps are not particularly limited and may be appropriately selected depending on the intended purpose. Examples thereof include an embossing step and a controlling step.

The other units are not particularly limited and may be appropriately selected depending on the intended purpose. Examples thereof include an embossing unit and a controlling unit.

### <<Embossing step and embossing unit>>

The embossing step is a step of forming concave and convex patterns on the volume expansion layer and the colorant layer, and is performed by the embossing unit.

For the concave and convex patterns, it is possible to select and use methods such as embossing, chemical embossing, rotary screening processing, and thermography that are generally used for the purpose of giving concave and convex portions to wallpaper or a dressing material. Examples of the embossing step include methods for giving concave and convex portions through processing with an embossing plate, chemical embossing, rotary screening, or thermography.

The embossing unit may be a unit configured to perform embossing with a cooling roller after heating or may be a unit configured to perform embossing with a heat embossing roller at one time.

An embossing depth through the embossing is preferably 0.08 mm or more but 0.50 mm or less. When the embossing depth is 0.08 mm or more, a three-dimensional effect can be achieved. When the embossing depth thereof is 0.50 mm or less, abrasion resistance on the surface can be improved.

Shapes of the concave and convex patterns formed through the embossing are, for example, wood grain conduit grooves, concave and convex portions on stone plates, cloth surface texture, matte, sand texture, hairline, and grooves of parallel lines.

### (Set for printing)

The set of the present invention for printing for producing a printed product by the above-mentioned method includes a curable composition including a volume expansion agent and a polymerizable monomer, a colorant composition including a colorant, and a volume-expansion-inhibiting-liquid that comprises a multifunctional polymerizable monomer.

The volume expansion agent is preferably at least one selected from the group consisting of a thermally expandable microcapsule and a pyrolytic volume expansion agent.

The colorant composition preferably includes a polymerizable compound. More preferably, the colorant composition further includes a polymerization initiator.

The set of the present invention for printing preferably includes an active-energy-ray-curable composition including the volume expansion agent and the polymerizable monomer, the colorant composition including an active-energy-ray-polymerizable compound and the colorant, and the volume-expansion-inhibiting-liquid that comprises a multifunctional active-energy-ray-polymerizable monomer.

The set of the present invention for printing preferably includes an active-energy-ray-curable composition including the volume expansion agent and the polymerizable monomer, the colorant composition including an active-energy-ray-polymerizable compound and the colorant, and the volume-expansion-inhibiting-liquid that comprises a mixture of a multifunctional active-energy-ray-polymerizable monomer and a monofunctional active-energy-ray-polymerizable monomer.

The set of the present invention for printing can achieve a printed product having the designability obtained by excellent concave and convex shapes and the image quality.

Here, an apparatus of the present invention for producing a printed product used in the method of the present invention for producing a printed product will be described in detail with reference to drawings. FIG. 1 is a schematic diagram illustrating one example of an apparatus of the present invention for producing a printed product used in a method of the present invention for producing a printed product in Example 1. An apparatus for producing a printed product 100 in FIG. 1 includes: a coating roller 10 configured to coat a curable composition on a base material 19; a discharging head 16 that is disposed downstream and includes a head for volume-expansion-inhibiting-liquid 11, a head for black 12, a head for cyan 13, a head for magenta 14, and a head for yellow 15; an active energy ray irradiator 17; and a heating device 18. In FIG. 1, the reference numeral 20 is a conveying belt, the reference numeral 21 is a delivery roller facing the coating roller 10, and the reference numeral 22 is a take-up roller.

The base material 19 is conveyed in a direction indicated by the arrow in FIG. 1 by taking up the conveying belt 20 by the take-up roller 22. First, a curable composition is coated on a surface of the base material using the coating roller 10 to thereby form a volume expansion layer. Next, the base material 19 on which the volume expansion layer is formed is scanned at a predetermined speed, and a volume-expansion-inhibiting-liquid is discharged from the head for volume-expansion-inhibiting-liquid 11 to a portion other than a portion of the volume expansion layer to be volume-expanded. Then, a colorant composition for black, a colorant composition for cyan, a colorant composition for magenta, and a colorant composition for yellow are discharged through the inkjet method by the head for black 12, the head for cyan 13, the head for magenta 14, and the head for yellow 15, respectively, to thereby form a colorant layer.

The volume expansion layer is irradiated with active energy rays using the active energy ray irradiator 17 under a predetermined irradiation condition to cure the volume expansion layer.

When the cured product obtained is heated by the heating device 18, the volume of the heated portions of the volume expansion layer is expanded to thereby obtain a printed product having the designability obtained by excellent concave and convex shapes and the image quality.

The printed product produced through the method of the present invention for producing a printed product and the printed product produced by the apparatus of the present invention for producing a printed product can achieve a printed product having the designability obtained by excellent concave and convex shapes and the image quality and can maintain the designability obtained by excellent concave and convex shapes and the image quality for a long period of time. Therefore, the printed product is suitable for applications such as materials for building (e.g., flooring materials, wallpaper, interior materials, wall panel materials, baseboard materials, ceiling materials, and pillars).

### [Examples]

The present invention will be described in more detail by way of Examples. The present invention should not be construed as being limited to these Examples.

### (Example 1)

FIG. 1 is a schematic diagram illustrating an apparatus of the present invention for producing a printed product that is used in Example 1. An apparatus for producing a printed product 100 in FIG. 1 includes: a coating roller 10 configured to coat a curable composition A on a base material 19; a discharging head 16 that is disposed downstream and includes a head for volume-expansion-inhibiting-liquid 11, a head for black 12, a head for cyan 13, a head for magenta 14, and a head for yellow 15; an active energy ray irradiator 17; and a heating device 18. In FIG. 1, the reference numeral 20 is a conveying belt, the reference numeral 21 is a delivery roller facing the coating roller 10, and the reference numeral 22 is a take-up roller. The base material 19 is conveyed in a direction indicated by the arrow in FIG. 1 by taking up the conveying belt 20 by the take-up roller 22.

As the discharging head 16, a GEN4 head (MH2420) (available from Ricoh Printing Systems) was used. Five heads for volume-expansion-inhibiting-liquid 11, five heads for black 12, five heads for cyan 13, five heads for magenta 14, and five heads for yellow 15 were disposed in parallel. The discharging head 16 was warmed to 45 degrees C, and frequency was controlled so as to enable drawing with a droplet size of 20 pL.

As the active energy ray irradiator 17, EC300/30/30mA (available from IWASAKI ELECTRIC CO., LTD.) was used. As the inert gas source, the N₂ gas generator (Maxi-Flow30, available from Inhouse Gas) with a compressor was coupled to the inside of the inert gas blanket at a pressure of 0.2 MPa · s, and N₂ was allowed to flow at a flow rate of from 2 L/min through 10 L/min. The setting was performed so that a concentration of oxygen was 500 ppm or less.

As the heating device 18, a heating device was used, which was provided by combining Voltex Blower G series (available from Hitachi Industrial Equipment Systems Co., Ltd.), an electric heater for generating high temperature hot-air XS-2 (available from Kansai Electric Heat Corp.), and a high-blow nozzle 50AL (available from Kansai Electric Heat Corp.) and was adjusted so that a wind velocity from the nozzle tip reached 30 m/sec.

First, the following curable composition A was coated on the surface of paper (OSTRICHDIA high-grade plain paper RJPH-03) having mass of 80 g/m² as the base material 19 using the coating roller 10 so as to have an average thickness of 100 micrometers to thereby form a volume expansion layer.

Next, the base material on which the volume expansion layer was formed was scanned at a speed of 15 m/min, and the following volume-expansion-inhibiting-liquid A was discharged to a portion other than a portion of the volume expansion layer to be volume-expanded from the head for volume-expansion-inhibiting-liquid 11. Then, the following colorant compositions A1 to A4 for black, cyan, magenta, and yellow, respectively were discharged from the head for black 12, the head for cyan 13, the head for magenta 14, and the head for yellow 15, and a 25% image (one-fourth width of each color film) was drawn through the inkjet method to thereby form a colorant layer.

Then, the volume expansion layer and the colorant layer were irradiated with active energy rays using the active energy ray irradiator 17 at an accelerating voltage of 30 kV and an irradiation condition of 30 kGy (dose) to thereby cure the volume expansion layer and the colorant layer. Then, when the cured product obtained was heated at 170 degrees C for 10 seconds using the heating device 18, the volume of the heated portions of the volume expansion layer was expanded. As a result, a printed product of Example 1 was obtained.

### <Preparation of curable composition A>

To a polymerizable compound (94% by mass) including methoxytriethylene glycol #400 acrylate (available from Shin Nakamura Chemical Co., Ltd.) (90 parts by mass) and trimethylolpropane triacrylate (available from TOMOE ENGINEERING CO., LTD.) (10 parts by mass), azodicarbonamide (available from EIWA CHEMICAL IND. CO., LTD) (3% by mass) as the volume expansion agent and zinc naphthenate (available from Tokyo Chemical Industry Co., Ltd.) (3% by mass) as the volume expansion accelerator were added and stirred to thereby prepare a curable composition A.

### <Volume-expansion-inhibiting-liquid A>

As the volume-expansion-inhibiting-liquid A, a liquid formed of the multifunctional monomer (1,6-hexanediol diacrylate) was used.

### <Preparation of colorant composition for black A1>

Acryloyl morpholine (available from Tokyo Chemical Industry Co., Ltd.) (60 parts by mass), benzyl acrylate (available from Tokyo Chemical Industry Co., Ltd.) (20 parts by mass), and SPECIAL BLACK 250 (black pigment, available from BASF Japan) (40 parts by mass) as the colorant were stirred to thereby prepare a colorant composition for black A1.

### <Preparation of colorant composition for cyan A2>

Acryloyl morpholine (available from Tokyo Chemical Industry Co., Ltd.) (60 parts by mass), benzyl acrylate (available from Tokyo Chemical Industry Co., Ltd.) (20 parts by mass), and IRGALITE BLUE GLVO (cyan pigment, available from BASF Japan) (40 parts by mass) as the colorant were stirred to thereby prepare a colorant composition for cyan A2.

### <Preparation of colorant composition for magenta A3>

Acryloyl morpholine (available from Tokyo Chemical Industry Co., Ltd.) (60 parts by mass), benzyl acrylate (available from Tokyo Chemical Industry Co., Ltd.) (20 parts by mass), and CINQUASIA MAGENTA RT-355-D (magenta pigment, available from BASF Japan) (40 parts by mass) as the colorant were stirred to thereby prepare a colorant composition for magenta A3.

### <Preparation of colorant composition for yellow A4>

Acryloyl morpholine (available from Tokyo Chemical Industry Co., Ltd.) (60 parts by mass), benzyl acrylate (available from Tokyo Chemical Industry Co., Ltd.) (20 parts by mass), and NOVOPERM YELLOW H2G (yellow pigment, available from Clariant) (40 parts by mass) as the colorant were stirred to thereby prepare a colorant composition for yellow A4.

### (Example 2)

A printed product was produced in the same manner as in Example 1 except that the curable composition A was changed to the following curable composition B.

### <Preparation of curable composition B>

Methoxytriethylene glycol #400 acrylate (available from Shin Nakamura Chemical Co., Ltd.) (90 parts by mass), trimethylolpropane triacrylate (available from TOMOE ENGINEERING CO., LTD.) (10 parts by mass), and KUREHA Microsphere (available from KUREHA CORPORATION, H750) (15 parts by mass) as the volume expansion agent were stirred to thereby prepare a curable composition B.

### (Example 3)

A printed product was produced in the same manner as in Example 2 except that: as a light source, an apparatus for producing a printed product presented in FIG. 2 was used; an active energy ray irradiator 37 with an LED light source unit (LEDZero Solidcure, available from Integration Technology) having a peak wavelength of 385 nm was disposed downstream of the head for volume-expansion-inhibiting-liquid 11; and the curable composition A was changed to the following curable composition C.

### <Preparation of curable composition C>

Isobornyl acrylate (available from TOMOE ENGINEERING CO., LTD.) (90 parts by mass), trimethylolpropane triacrylate (available from TOMOE ENGINEERING CO., LTD.) (10 parts by mass), KUREHA Microsphere (available from KUREHA CORPORATION, H750) (15 parts by mass) as the volume expansion agent, and a photopolymerization initiator (available from IGM Resins B.V., Omnirad TPO H) (1 part by mass) were stirred to thereby prepare a curable composition C.

### (Example 4)

A printed product was produced in the same manner as in Example 2 except that: an apparatus for producing a printed product presented in FIG. 3 was used; as a light source, each active energy ray irradiator 37 with an LED light source unit (LEDZero Solidcure, available from Integration Technology) having a peak wavelength of 385 nm was disposed downstream of the volume-expansion-inhibiting-liquid 11, downstream of the head for black 12, downstream of the head for cyan 13, and downstream of the head for magenta 14; the curable composition A was changed to the following curable composition C; and the colorant compositions A1 to A4 for black, cyan, magenta, and yellow, respectively were changed to colorant compositions B1 to B4 for black, cyan, magenta, and yellow, respectively.

### <Preparation of curable composition C>

Isobornyl acrylate (available from TOMOE ENGINEERING CO., LTD.) (90 parts by mass), trimethylolpropane triacrylate (available from TOMOE ENGINEERING CO., LTD.) (10 parts by mass), KUREHA Microsphere (available from KUREHA CORPORATION, H750) (15 parts by mass) as the volume expansion agent, and a photopolymerization initiator (available from IGM Resins B.V., Omnirad TPO H) (1 part by mass) were stirred to thereby prepare a curable composition C.

### <Preparation of colorant composition for black B1>

Acryloyl morpholine (available from Tokyo Chemical Industry Co., Ltd.) (60 parts by mass), benzyl acrylate (available from Tokyo Chemical Industry Co., Ltd.) (20 parts by mass), a photopolymerization initiator (available from IGM Resins B.V., Omnirad TPO H) (1 parts by mass), and SPECIAL BLACK 250 (black pigment, available from BASF Japan) (40 parts by mass) as the colorant were stirred to thereby prepare a colorant composition for black B1.

### <Preparation of colorant composition for cyan B2>

Acryloyl morpholine (available from Tokyo Chemical Industry Co., Ltd.) (60 parts by mass), benzyl acrylate (available from Tokyo Chemical Industry Co., Ltd.) (20 parts by mass), a photopolymerization initiator (available from IGM Resins B.V., Omnirad TPO H) (1 part by mass), and IRGALITE BLUE GLVO (cyan pigment, available from BASF Japan) (40 parts by mass) as the colorant were stirred to thereby prepare a colorant composition for cyan B2.

### <Preparation of colorant composition for magenta B3>

Acryloyl morpholine (available from Tokyo Chemical Industry Co., Ltd.) (60 parts by mass), benzyl acrylate (available from Tokyo Chemical Industry Co., Ltd.) (20 parts by mass), a photopolymerization initiator (available from IGM Resins B.V., Omnirad TPO H) (1 parts by mass), and CINQUASIA MAGENTA RT-355-D (magenta pigment, available from BASF Japan) (40 parts by mass) as the colorant were stirred to thereby prepare a colorant composition for magenta B3.

### <Preparation of colorant composition for yellow B4>

Acryloyl morpholine (available from Tokyo Chemical Industry Co., Ltd.) (60 parts by mass), benzyl acrylate (available from Tokyo Chemical Industry Co., Ltd.) (20 parts by mass), a photopolymerization initiator (available from IGM Resins B.V., Omnirad TPO H) (1 part by mass), and NOVOPERM YELLOW H2G (yellow pigment, available from Clariant) (40 parts by mass) as the colorant were stirred to thereby prepare a colorant composition for yellow B4.

### (Example 5)

A printed product was produced in the same manner as in Example 3 except that: an apparatus for producing a printed product presented in FIG. 4 was used; and a coating roller 28 was disposed downstream of the active energy ray irradiator 27 that was disposed downstream of the head for volume-expansion-inhibiting-liquid 11.

### (Example 6)

A printed product was produced in the same manner as in Example 2 except that: an apparatus for producing a printed product presented in FIG. 5 was used; the colorant compositions A1 to A4 for black, cyan, magenta, and yellow, respectively were changed to the following commercially available solvent inks D1 to D4; the active energy ray irradiator 17 disposed downstream of the head for yellow 15 was removed; and the active energy ray irradiator 17 was disposed downstream of the head for volume-expansion-inhibiting-liquid 11.

### <Solvent inks D1 to D4>

▪ Solvent ink for cyan D1 (available from MIMAKI ENGINEERING CO., LTD., SPC-0440C)
▪ Solvent ink for magenta D2 (available from MIMAKI ENGINEERING CO., LTD., SPC-0440M)
▪ Solvent ink for yellow D3 (available from MIMAKI ENGINEERING CO., LTD., SPC-0440Y)
▪ Solvent ink for black D4 (available from MIMAKI ENGINEERING CO., LTD., SPC-0440K)

### (Example 7)

A printed product of Example 7 was obtained in the same manner as in Example 2 except that the curable composition A was coated using the coating roller 10 so as to have an average thickness of 400 micrometers to thereby form the volume expansion layer.

### (Example 8)

A printed product of Example 8 was obtained in the same manner as in Example 2 except that a multifunctional monomer (1,6-hexanediol diacrylate) as a foam-inhibiting liquid A was changed to a monofunctional monomer (isobornyl acrylate (available from TOMOE ENGINEERING CO., LTD.) as a foam-inhibiting liquid B.

### (Example 9)

A printed product was produced in the same manner as in Example 2 except that: an apparatus for producing a printed product presented in FIG. 6 was used; an active energy ray irradiator 17a was disposed downstream of a head for volume-expansion-inhibiting-liquid 11a; the following commercially available white ink was coated with an intermediate coating roller 23 downstream of the active energy ray irradiator 17a; the colorant compositions A1 to A4 for black, cyan, magenta, and yellow, respectively were changed to the following commercially available solvent UV inks E1 to E4; and an active energy ray irradiator 17b was disposed downstream of the head for yellow 15; and a heating device 18, a head for topcoat 11b configured to discharge the following ink for topcoat T1, and an active energy ray irradiator 17c were disposed downstream of the active energy ray irradiator 17b.

### <Intermediate layer-coating liquid>

- White ink (available from MIMAKI ENGINEERING CO., LTD., SS21)

### <Solvent UV inks E1 to E4>

· Solvent UV ink for cyan E1 (available from MIMAKI ENGINEERING CO., LTD., SU100-60-C)
· Solvent UV ink for magenta E2 (available from MIMAKI ENGINEERING CO., LTD., SU100-60-M)
· Solvent UV ink for yellow E3 (available from MIMAKI ENGINEERING CO., LTD., SU100-60-Y)
· Solvent UV ink for black E4 (available from MIMAKI ENGINEERING CO., LTD., SU100-60-K)

### <Ink for topcoat T1>

Ink for topcoat T1 (available from MIMAKI ENGINEERING CO., LTD., LUS17-CL-BA)

### (Comparative Example 1)

In Example 1, a printed product was produced in the same manner as in Example 1 except that the curable composition A was changed to the following curable composition D.

### <Preparation of curable composition D>

Isobornyl acrylate (available from TOMOE ENGINEERING CO., LTD.) (90 parts by mass) and trimethylolpropane triacrylate (available from TOMOE ENGINEERING CO., LTD.) (10 parts by mass) were stirred to thereby prepare a curable composition D.

Next, each of the printed products obtained in Examples 1 to 9 and Comparative Example 1 was evaluated for durability of the designability obtained by concave and convex shapes and the image quality as described below. Results are presented in Table 1.

### <Designability obtained by concave and convex shapes>

A degree of designability obtained by concave and convex shapes; i.e., how well the concave and convex shapes correspond to the coating pattern of the volume-expansion-inhibiting-liquid in the obtained printed portion was confirmed by visual observation and touching texture, and was evaluated based on the following criteria.

### --Evaluation criteria--

A: The coating pattern of the volume-expansion-inhibiting-liquid corresponds to the concave and convex shapes, and differences between concave portions and convex portions can be clearly confirmed only by visual observation.
B: The coating pattern of the volume-expansion-inhibiting-liquid corresponds to the concave and convex shapes, and differences between concave portions and convex portions can be seen only by visual observation.
C: The concave and convex shapes relative to coating patterns of the volume-expansion-inhibiting-liquid cannot be confirmed by visual observation, but the correspondence can be found by touching texture.
D: The concave and convex shapes relative to coating patterns of the volume-expansion-inhibiting-liquid cannot be judged by neither visual observation nor touching texture.

### <Method for evaluating durability of designability obtained by concave and convex shapes and image quality>

The surface of the printed product obtained was scratched using a cutter. Then, the surface thereof was sprayed with water, ethanol, acetone, and toluene, and was left to stand for 12 hours. Then, the surface of the printed product was rubbed using paper 10 times. The image portion after the rubbing and a degree of the state of the expanded volume were observed by visual observation or under a microscope. The durability of the designability obtained by concave and convex shapes and the image quality was judged based on the following evaluation criteria.

### --Evaluation criteria--

A: Neither the blur of the image portion nor exfoliation of the volume expansion layer from the base material occurs, which is a considerably good level.
B; The blur of the image portion and exfoliation of the volume expansion layer from the base material hardly occur, which is a good level.
C: The blur of the image portion and exfoliation of the volume expansion layer from the base material slightly occur, but they are a practical level.
D: The blur of the image portion is spread over the whole rubbed area and exfoliation of the volume expansion layer is also spread over the whole rubbed area, which is a not practical level.

**[Table 1]**

| | Examples | | | | | | | | | Comparative Example |
|---|---|---|---|---|---|---|---|---|---|---|
| | 1 | 2 | 3 | 4 | 5 | 6 | 7 | 8 | 9 | 1 |
| Design ability obtained by concave and convex shapes | C | B | B | B | B | B | A | C | B | - |
| Durability of design ability obtained by concave and convex shapes and image quality | B | B | A | A | A | B | A | C | A | - |

| | | | | | | | | | | |
|---|---|---|---|---|---|---|---|---|---|---|
| * The "-" in Comparative Example 1 in Table 1 means that the volume of the volume expansion layer was not expanded and the designability obtained by concave and convex shapes was not given. | | | | | | | | | | |

### [Reference Signs List]

- 10: coating roller
- 11: head for a volume-expansion-inhibiting-liquid
- 12: head for black
- 13: head for cyan
- 14: head for magenta
- 15: head for yellow
- 16: discharging head
- 17: active energy ray irradiator
- 18: heating device
- 19: base material
- 20: conveying belt
- 21: delivery roller
- 22: take-up roller
- 27: active energy ray irradiator
- 37: active energy ray irradiator
- 47: active energy ray irradiator
- 100: apparatus for producing a printed product

## Claims

1. A method for producing a printed product, the method comprising:
applying a curable composition including a volume expansion agent and a polymerizable monomer, to form a volume expansion layer;
applying a volume-expansion-inhibiting-liquid to a portion other than a portion of the volume expansion layer to be volume-expanded;
applying a colorant composition including a colorant, to form a colorant layer; and
applying heat or active energy rays to the volume expansion layer and the colorant layer,
wherein the volume-expansion-inhibiting-liquid comprises a multifunctional polymerizable monomer.

2. The method for producing a printed product according to claim 1,
wherein when the energy is the active energy rays, the method further includes heating the volume expansion layer to expand volume of the volume expansion layer.

3. The method for producing a printed product according to claim 1 or 2,
wherein the volume expansion agent is at least one selected from the group consisting of a thermally expandable microcapsule and a pyrolytic volume expansion agent.

4. The method for producing a printed product according to any one of claims 1 to 3,
wherein an average thickness of the volume expansion layer is 25 micrometers or more.

5. The method for producing a printed product according to any one of claims 1 to 4,
wherein the colorant composition is applied through an inkjet method.

6. The method for producing a printed product according to any one of claims 1 to 5,
wherein the volume-expansion-inhibiting-liquid is applied through an inkjet method.

7. The method for producing a printed product according to any one of claims 1 to 6,
wherein the curable composition is an active-energy-ray-curable composition.

8. The method for producing a printed product according to any one of claims 1 to 7,
wherein the colorant composition includes a polymerizable compound.

9. The method for producing a printed product according to any one of claims 1 to 8,
wherein the volume expansion layer and the colorant layer are formed on a base material, and the base material is a material for building.

10. An apparatus (100) for producing a printed product, the apparatus (100) comprising:
a volume expansion layer forming unit comprising the curable composition according to claim 1 and configured to apply the curable composition, to form a volume expansion layer;
a volume-expansion-inhibiting-liquid applying unit comprising the volume-expansion-inhibiting-liquid according to claim 1 and configured to apply the volume-expansion-inhibiting-liquid to a portion other than a portion of the volume expansion layer to be volume-expanded;
a colorant layer forming unit comprising the colorant composition according to claim 1 and configured to apply the colorant composition, to form a colorant layer; and
an energy applying unit configured to apply heat or active energy rays to the volume expansion layer and the colorant layer.

11. A set for printing for producing a printed product by the method according to claim 1, the set comprising:
a curable composition including a volume expansion agent and a polymerizable monomer;
a colorant composition including a colorant; and
a volume-expansion-inhibiting-liquid comprising a multifunctional polymerizable monomer.

12. The set for printing according to claim 11, the set comprising:
an active-energy-ray-curable composition including the volume expansion agent and the polymerizable monomer;
the colorant composition including an active-energy-ray-polymerizable compound and the colorant; and
the volume-expansion-inhibiting-liquid comprising a multifunctional active-energy-ray-polymerizable monomer.

13. The set for printing according to claim 11, the set comprising:
an active-energy-ray-curable composition including the volume expansion agent and the polymerizable monomer;
the colorant composition including an active-energy-ray-polymerizable compound and the colorant; and
the volume-expansion-inhibiting-liquid comprising a mixture of a multifunctional active-energy-ray-polymerizable monomer and a monofunctional active-energy-ray-polymerizable monomer.

## Patentansprüche

1. Herstellungsverfahren für ein gedrucktes Produkts, wobei das Verfahren Folgendes umfasst:
Anwenden einer aushärtbaren Zusammensetzung, die ein Volumenexpansionsmittel und ein polymerisierbares Monomer einschließt, um eine Volumenexpansionsschicht zu bilden;
Anwenden einer Volumenexpansionshemmungsflüssigkeit auf einen anderen Abschnitt als den Abschnitt der Volumenexpansionsschicht, der volumenexpandiert werden soll;
Anwenden einer Farbstoffzusammensetzung, die einen Farbstoff einschließt, um eine Farbstoffschicht zu bilden; und
Anwenden von Wärme oder aktiven Energiestrahlen auf die Volumenexpansionsschicht und die Farbmittelschicht,
wobei die Volumenexpansionshemmungsflüssigkeit ein multifunktionales polymerisierbares Monomer umfasst.

2. Herstellungsverfahren für ein gedrucktes Produkt nach Anspruch 1,
wobei, wenn es sich bei der Energie um die aktive Energiestrahlen handelt, das Verfahren weiter Erhitzen der Volumenexpansionsschicht um Expandieren des Volumens der Volumenexpansionsschicht einschließt.

3. Herstellungsverfahren für ein gedrucktes Produkt nach Anspruch 1 oder 2,
wobei das Volumenexpansionsmittel mindestens eines ist, ausgewählt aus einer Gruppe bestehend aus einer thermisch expandierbaren Mikrokapsel und einem pyrolytischen Volumenexpansionsmittel.

4. Herstellungsverfahren für ein gedrucktes Produkt nach einem der Ansprüche 1 bis 3,
wobei eine durchschnittliche Dicke der Volumenexpansionsschicht 25 Mikrometer oder mehr beträgt.

5. Herstellungsverfahren für ein gedrucktes Produkt nach einem der Ansprüche 1 bis 4,
wobei die Farbstoffzusammensetzung durch ein Tintenstrahlverfahren angewendet wird.

6. Herstellungsverfahren für ein gedrucktes Produkt nach einem der Ansprüche 1 bis 5,
wobei die Volumenexpansionshemmungsflüssigkeit durch ein Tintenstrahlverfahren angewendet wird.

7. Herstellungsverfahren für ein gedrucktes Produkt nach einem der Ansprüche 1 bis 6,
wobei es sich bei der aushärtbaren Zusammensetzung um eine durch aktive Energiestrahlung aushärtbare Zusammensetzung handelt.

8. Herstellungsverfahren für ein gedrucktes Produkt nach einem der Ansprüche 1 bis 7,
wobei die Farbstoffzusammensetzung eine polymerisierbare Verbindung einschließt.

9. Herstellungsverfahren für ein gedrucktes Produkt nach einem der Ansprüche 1 bis 8,
wobei die Volumenexpansionsschicht und die Farbstoffschicht auf einem Basismaterial gebildet werden und das Basismaterial ein Baustoff ist.

10. Einrichtung (100) zur Erzeugung eines gedruckten Produkts, wobei die Einrichtung (100) Folgendes umfasst:
eine Volumenexpansionsschichtbildungseinheit, die die aushärtbare Zusammensetzung nach Anspruch 1 umfasst und so konfiguriert ist, dass sie die aushärtbare Zusammensetzung anwendet, um eine Volumenexpansionsschicht zu bilden;
eine Volumenexpansionshemmungsflüssigkeits-Anwendungseinheit, die die Volumenexpansionshemmungsflüssigkeit nach Anspruch 1 umfasst und so konfiguriert, dass sie die Volumenexpansionshemmungsflüssigkeit auf einen anderen Abschnitt anwendet als einen Abschnitt der Volumenexpansionsschicht, der volumenexpandiert werden soll;
eine Farbstoffschichtbildungseinheit, die die Farbstoffzusammensetzung nach Anspruch 1 umfasst und so konfiguriert ist, dass sie die Farbstoffzusammensetzung anwendet, um eine Farbstoffschicht zu bilden; und
eine Energieanwendungseinheit, die so konfiguriert ist, dass sie Wärme oder aktive Energiestrahlen auf die Volumenexpansionsschicht und die Farbstoffschicht anwendet.

11. Set zum Drucken zur Herstellung eines gedruckten Produkts durch das Verfahren nach Anspruch 1, wobei das Set Folgendes umfasst:
eine aushärtbare Zusammensetzung, die ein Volumenexpansionsmittel und ein polymerisierbares Monomer einschließt;
eine Farbstoffzusammensetzung, die einen Farbstoff einschließt; und
eine Volumenexpansionshemmungsflüssigkeit, die ein multifunktionales polymerisierbares Monomer einschließt.

12. Set zum Drucken nach Anspruch 11, wobei das Set Folgendes umfasst:
eine durch aktive Energiestrahlung härtbare Zusammensetzung, die das Volumenexpansionsmittel und das polymerisierbare Monomer einschließt;
die Farbmittelzusammensetzung, die eine durch aktive Energiestrahlung polymerisierbare Verbindung und den Farbstoff einschließt; und
die Volumenexpansionshemmungsflüssigkeit, die ein multifunktionales, durch aktive Energiestrahlung polymerisierbares Monomer umfasst.

13. Set zum Drucken nach Anspruch 11, wobei das Set Folgendes umfasst:
eine durch aktive Energiestrahlung härtbare Zusammensetzung, die das Volumenexpansionsmittel und das polymerisierbare Monomer einschließt;
die Farbmittelzusammensetzung, die eine durch aktive Energiestrahlung polymerisierbare Verbindung und den Farbstoff einschließt; und
die Volumenexpansionshemmungsflüssigkeit, die eine Mischung aus einem multifunktionellen, durch aktive Energiestrahlung polymerisierbaren Monomer und einem monofunktionellen, durch aktive Energiestrahlung polymerisierbaren Monomer umfasst.

## Revendications

1. Procédé de production d'un produit imprimé, le procédé comprenant :
l'application d'une composition durcissable incluant un agent d'expansion de volume et un monomère polymérisable pour former une couche d'expansion de volume ;
l'application d'un liquide inhibiteur d'expansion de volume à une partie autre qu'une partie de la couche d'expansion de volume à dilater ;
l'application d'une composition colorante incluant un colorant pour former une couche de colorant ; et
l'application de chaleur ou de rayons d'énergie active à la couche d'expansion de volume et à la couche de colorant,
dans lequel le liquide inhibiteur d'expansion de volume comprend un monomère polymérisable multifonctionnel.

2. Procédé de production d'un produit imprimé selon la revendication 1,
dans lequel lorsque l'énergie est constituée de rayons d'énergie active, le procédé inclut en outre le chauffage de la couche d'expansion de volume pour augmenter le volume de la couche d'expansion de volume.

3. Procédé de production d'un produit imprimé selon la revendication 1 ou 2,
dans lequel l'agent d'expansion de volume est au moins un agent choisi parmi le groupe constitué d'une microcapsule thermo-extensible et d'un agent d'expansion de volume pyrolytique.

4. Procédé de production d'un produit imprimé selon l'une quelconque des revendications 1 à 3,
dans lequel l'épaisseur moyenne de la couche d'expansion de volume est de 25 micromètres ou plus.

5. Procédé de production d'un produit imprimé selon l'une quelconque des revendications 1 à 4,
dans lequel la composition colorante est appliquée par un procédé à jet d'encre.

6. Procédé de production d'un produit imprimé selon l'une quelconque des revendications 1 à 5,
dans lequel le liquide inhibiteur d'expansion de volume est appliqué par un procédé à jet d'encre.

7. Procédé de production d'un produit imprimé selon l'une quelconque des revendications 1 à 6,
dans lequel la composition durcissable est une composition durcissable par rayons d'énergie active.

8. Procédé de production d'un produit imprimé selon l'une quelconque des revendications 1 à 7,
dans lequel la composition colorante comporte un composé polymérisable.

9. Procédé de production d'un produit imprimé selon l'une quelconque des revendications 1 à 8,
dans lequel la couche d'expansion de volume et la couche de colorant sont formées sur un matériau de base, et le matériau de base est un matériau de construction.

10. Appareil (100) de production d'un produit imprimé, l'appareil (100) comprenant :
une unité de formation de couche d'expansion de volume comprenant la composition durcissable selon la revendication 1 et configurée pour appliquer la composition durcissable afin de former une couche d'expansion de volume ;
une unité d'application de liquide inhibiteur d'expansion de volume comprenant le liquide inhibiteur d'expansion de volume selon la revendication 1 et configurée pour appliquer le liquide inhibiteur d'expansion de volume à une partie autre qu'une partie de la couche d'expansion de volume à dilater en volume ;
une unité de formation de couche de colorant comprenant la composition colorante selon la revendication 1 et configurée pour appliquer la composition colorante afin de former une couche de colorant ; et
une unité d'application d'énergie configurée pour appliquer de la chaleur ou des rayons d'énergie active à la couche d'expansion de volume et à la couche de colorant.

11. Ensemble d'impression pour la production d'un produit imprimé par le procédé selon la revendication 1, l'ensemble comprenant :
une composition durcissable incluant un agent d'expansion de volume et un monomère polymérisable ;
une composition colorante incluant un colorant ; et
un liquide inhibiteur d'expansion de volume comprenant un monomère polymérisable multifonctionnel.

12. Ensemble d'impression selon la revendication 11, l'ensemble comprenant :
une composition durcissable par rayons d'énergie active incluant l'agent d'expansion de volume et le monomère polymérisable ;
la composition colorante incluant un composé polymérisable par rayons d'énergie active et le colorant ; et
le liquide inhibiteur d'expansion de volume comprenant un monomère polymérisable par rayons d'énergie active multifonctionnel.

13. Ensemble d'impression selon la revendication 11, l'ensemble comprenant :
une composition durcissable par rayons d'énergie active incluant l'agent d'expansion de volume et le monomère polymérisable ;
la composition colorante incluant un composé polymérisable par rayons d'énergie active et le colorant ; et
le liquide inhibiteur d'expansion de volume comprenant un mélange d'un monomère polymérisable par rayons d'énergie active multifonctionnel et d'un monomère polymérisable par rayons d'énergie active monofonctionnel.
